# EUROPÄISCHE PATENTSCHRIFT

(11) **EP 2 118 529 B1**
(45) Veröffentlichungstag und Bekanntmachung des Hinweises auf die Patenterteilung: **23.01.2013**
(21) Anmeldenummer: 08717025.4
(22) Anmeldetag: 22.02.2008
(51) Int. Cl.: F16H 61/70

(54) **VERFAHREN ZUR SCHALTSTEUERUNG EINES AUTOMATISIERTEN GRUPPENGETRIEBES**
SHIFT CONTROL METHOD FOR AN AUTOMATIC GROUP TRANSMISSION
PROCEDE DE COMMANDE DE CHANGEMENT DE VITESSE D'UNE BOÎTE DE VITESSES A CHANGEMENT DE GAMME DE VITESSES AUTOMATIQUE

(30) Priorität: 06.03.2007 DE 102007010827
(43) Veröffentlichungstag der Anmeldung: 18.11.2009
(73) Patentinhaber: ZF Friedrichshafen AG, 88038 Friedrichshafen (DE)
(72) Erfinder: BADER, Josef, 88045 Friedrichshafen (DE); DOEBELE, Bernd, 88682 Salem (DE); MILLER, Martin, 88090 Immenstaad (DE)
(86) Internationale Anmeldenummer: PCT/EP2008/052161
(87) Internationale Veröffentlichungsnummer: WO 2008/107316

(56) Entgegenhaltungen:
- EP-A- 1 055 845
- DE-A1- 10 152 857
- US-A- 3 508 450

## Beschreibung

Die Erfindung betrifft ein Verfahren zur Schaltsteuerung eines automatisierten Gruppengetriebes gemäß dem Oberbegriff des Patentanspruchs 1.

Gruppengetriebe mit einem mehrgängigen Hauptgetriebe und einer diesem antriebstechnisch vorgeschalteten Vorschaltgruppe sowie einer diesem antriebstechnisch nachgeschalteten Bereichsgruppe sind seit längerem bekannt und kommen bevorzugt in Nutzfahrzeugen zum Einsatz. Durch die zumeist zweistufig ausgeführte Vorschaltgruppe mit geringem Übersetzungssprung, die auch als Splitgruppe bezeichnet werden kann, werden die Übersetzungssprünge zwischen den Übersetzungsstufen des Hauptgetriebes in etwa halbiert und damit die Anzahl der insgesamt zur Verfügung stehenden Übersetzungsstufen verdoppelt. Durch eine üblicherweise zweistufige Bereichsgruppe wird die Spreizung des Gesamtgetriebes deutlich erhöht und die Anzahl der insgesamt zur Verfügung stehenden Übersetzungsstufen nochmals verdoppelt. Hieraus ergibt sich in Verbindung mit einem dreistufigen Hauptgetriebe (mit drei Vorwärtsgängen und einem Rückwärtsgang) ein 12-gängiges Gruppengetriebe (mit insgesamt zwölf Vorwärtsgängen und maximal vier Rückwärtsgängen) sowie in Verbindung mit einem vierstufigen Hauptgetriebe (mit vier Vorwärtsgängen und einem Rückwärtsgang) ein 16-gängiges Gruppengetriebe (mit insgesamt sechzehn Vorwärtsgängen und maximal vier Rückwärtsgängen).

Das Gruppengetriebe weist gegenüber einem Einzelgetriebe mit einer vergleichbaren Anzahl von Gängen sowie ähnlicher Gangabstufung und Spreizung deutlich kompaktere Abmessungen und ein geringeres Gewicht auf. Da viele Schaltungen in einem Gruppengetriebe aber den Wechsel von Übersetzungsstufen in mehreren Teilgetrieben erfordern und somit relativ kompliziert ablaufen, sind die meisten bekannten Gruppengetriebe entweder teilautomatisiert oder vollautomatisiert schaltbar ausgebildet.

Ein Überblick über automatisierte Gruppengetriebe der Anmelderin ist in der ATZ 9/2004 auf den Seiten 772 - 783 veröffentlicht. Aus der als AS-Tronic-Familie bezeichneten Baureihe automatisierter Schaltgetriebe sind die für mittelschwere Nutzfahrzeuge konzipierten Getriebe der AS-Tronic-mid-Baureihe und die für schwere Nutzfahrzeuge vorgesehenen Getriebe der AS-Tronic-Baureihe jeweils als Gruppengetriebe mit einem mehrstufigen, also mit drei oder vier Vorwärtsgängen versehenen Hauptgetriebe, einer dem Hauptgetriebe vorgeschalteten zweistufigen Splitgruppe und einer dem Hauptgetriebe nachgeordneten zweistufigen Bereichsgruppe ausgebildet.

Das Hauptgetriebe ist jeweils in Vorgelegebauweise ausgeführt sowie mit unsynchronisierten Klauenkupplungen versehen, und weist im Fall der AS-Tronic-mid-Baureihe eine einzige Vorgelegewelle auf. Bei den Getrieben der AS-Tronic-Baureihe sind aus Gründen der Gewichts- und Bauraumoptimierung zwei Vorgelegewellen vorhanden. In beiden Baureihen ist das Hauptgetriebe wahlweise in einer Direktgangausführung (i_{HG_min} = 1) oder in einer Schnellgangausführung (i_{HG_min} < 1) verfügbar.

Die Splitgruppe ist jeweils als ein Vorgelegegetriebe mit zwei schaltbaren Eingangskonstanten für das Hauptgetriebe ausgebildet. Die Bereichsgruppe ist jeweils als zweistufiges Planetengetriebe mit einer schaltbaren Direktverbindung (i_{BG} = 1) und einer alternativ schaltbaren hohen Übersetzung (i_{BG} >> 1) ausgeführt.

Weitere Ausführungen von Gruppengetrieben mit jeweils einem Hauptgetriebe, einer Vorschaltgruppe und einer nachgeschalteten Bereichsgruppe sind beispielsweise aus der DE 101 43 994 A1 bekannt.

Bei den Gruppengetrieben der AS-Tronic- und AS-Tronic-mid-Baureihe sind bislang die jeweils in einem gemeinsamen Schaltpaket zusammengefassten Schaltkupplungen der Splitgruppe und der Bereichsgruppe jeweils synchronisiert ausgebildet, wogegen das Hauptgetriebe klauengeschaltet, also unsynchronisiert schaltbar ausgeführt ist. Da die betreffenden synchronisierten Schaltkupplungen aber aufgrund eines komplizierten Aufbaus teuer sind, einen relativ großen Bauraum erfordern, und verschleißbedingt die Lebensdauer des gesamten Gruppengetriebes beschränken, ist für zukünftige Ausführungen derartiger Gruppengetriebe vorgesehen, neben dem Hauptgetriebe auch die Bereichsgruppe klauengeschaltet auszuführen.

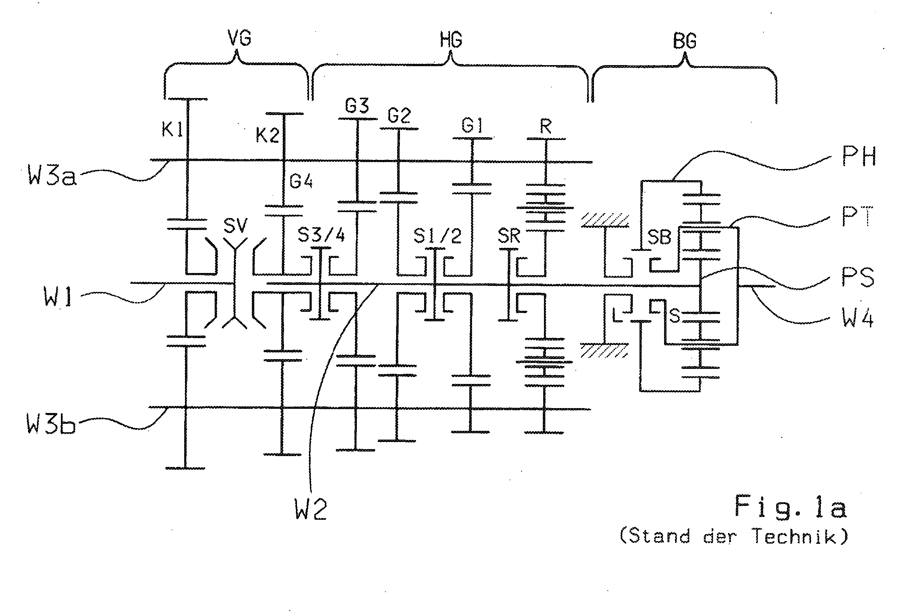

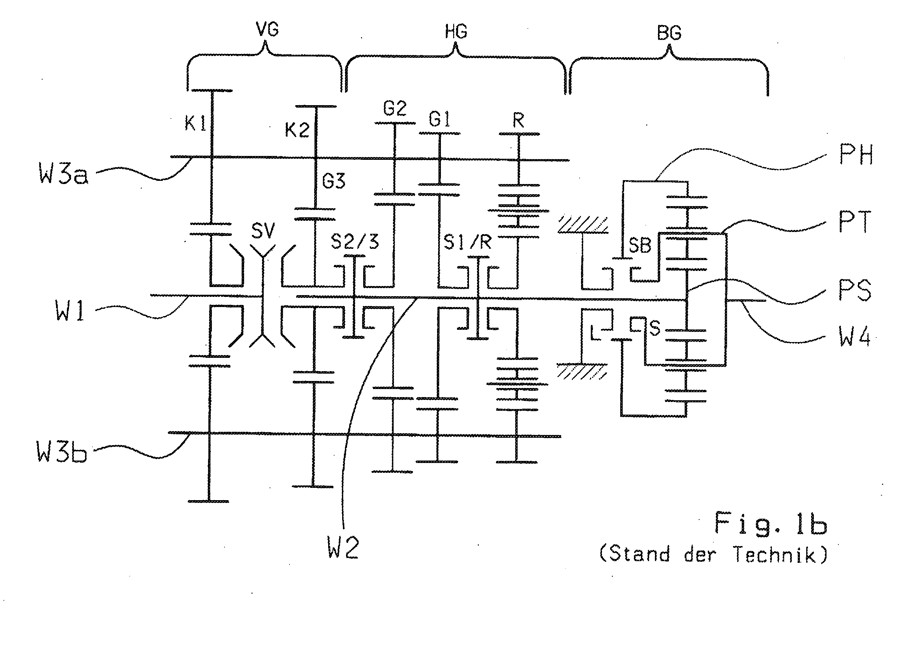

In den Fig. 1 a und 1 b ist beispielhaft der schematische Aufbau von zwei an sich bekannten Gruppengetrieben der AS-Tronic-Baureihe dargestellt. Das Hauptgetriebe HG ist als Direktganggetriebe in Vorgelegebauweise ausgeführt und weist eine Hauptwelle W2 und zwei Vorgelegewellen W3a, W3b auf. In der Ausführungsform gemäß Fig. 1 a ist das Hauptgetriebe HG mit vier Übersetzungsstufen G1 bis G4 für die Vorwärtsfahrt und einer Übersetzungsstufe R für die Rückwärtsfahrt vierstufig ausgebildet. In der Ausführungsform gemäß Fig. 1b ist das Hauptgetriebe HG mit drei Übersetzungsstufen G1 bis G3 für die Vorwärtsfahrt und einer Übersetzungsstufe R für die Rückwärtsfahrt dreistufig ausgebildet.

Die Losräder der Übersetzungsstufen G1, G2, G3, R bzw. G1, G2, R sind jeweils drehbar auf der Hauptwelle W2 gelagert und über zugeordnete Klauenkupplungen schaltbar. Die zugeordneten Festräder sind drehfest auf den Vorgelegewellen W3a bzw. W3b angeordnet. Die jeweils als Direktgang ausgebildete höchste Übersetzungsstufe G4 bzw. G3 ist über eine Direktschaltkupplung SV schaltbar. Sofern möglich, sind jeweils zwei Schaltkupplungen in einem gemeinsamen Schaltpaket S1/2, S3/4 bzw. S1/R, S2/3 zusammengefasst. In der Ausführungsform nach Fig. 1 a weist das Schaltpaket SR nur die Schaltkupplung der Übersetzungsstufe für Rückwärtsfahrt R auf.

Die Vorschaltgruppe VG ist zweistufig ausgebildet und ebenfalls in Vorgelegebauweise ausgeführt, wobei die beiden Übersetzungsstufen K1 und K2 zwei schaltbare Eingangskonstanten des Hauptgetriebes HG bilden. Durch eine geringe Übersetzungsdifferenz der beiden Übersetzungsstufen K1, K2 ist die Vorschaltgruppe VG als Splitgruppe ausgelegt. Das Losrad der ersten Übersetzungsstufe K1 ist drehbar auf der Eingangswelle W1 gelagert, die außerhalb der Darstellung von Fig. 1 a bzw. Fig. 1b über eine steuerbare Trennkupplung mit einem als Verbrennungsmotor ausgebildeten Antriebsmotor in Verbindung steht. Das Losrad der zweiten Übersetzungsstufe K2 ist drehbar auf der Hauptwelle W2 gelagert. Die Festräder beider Übersetzungsstufen K1, K2 sind jeweils drehfest auf den eingangsseitig verlängerten Vorgelegewellen W3a, W3b angeordnet. Die synchronisiert ausgebildeten Schaltkupplungen der Vorschaltgruppe VG sind in einem gemeinsamen Schaltpaket SV zusammengefasst.

Die antriebstechnisch nachgeschaltete Bereichsgruppe BG ist ebenfalls zweistufig ausgebildet, jedoch in Planetenbauweise mit einem einfachen Planetenradsatz ausgeführt: Das Sonnenrad PS ist dabei drehfest mit der ausgangsseitig verlängerten Häuptwelle W2 verbunden. Der Planetenträger PT ist drehfest mit der Ausgangswelle W4 des Gruppengetriebes verbunden. Das Hohlrad PH steht mit einem Schaltpaket SB mit zwei Schaltkupplungen in Verbindung, mittels denen die Bereichsgruppe BG wechselweise durch die Verbindung des Hohlrades PH mit einem feststehenden Gehäuseteil in eine Langsamfahrstufe L und durch die Verbindung des Hohlrades PH mit dem Planetenträger PT in eine Schnellfahrstufe S schaltbar ist. Im Gegensatz zur bisherigen Ausführungsform der AS-Tronic-Getriebe sind die Schaltkupplungen des Schaltpakets SB vorliegend unsynchronisiert ausgebildet.

In einem derartigen Gruppengetriebe ist aufgrund der unsynchronisierten Ausführung der Bereichsgruppe BG ein spezieller Schaltablauf erforderlich, der sich deutlich von demjenigen eines weitgehend identischen, jedoch mit synchronisierter Bereichsgruppe BG versehenen Gruppengetriebes unterscheidet. Ein geeignetes Verfahren zur Schaltsteuerung eines Gruppengetriebes mit einer unsynchronisierten Bereichsgruppe BG ist beispielsweise aus der DE 101 52 857 A1 welche die merkmalen des Oberbegriffs des 1. Anspruchs offenbart, bekannt. In diesem Verfahren ist im Wesentlichen vorgesehen, dass bei einer Bereichsschaltung zunächst die Vorschaltgruppe VG und die Bereichsgruppe BG zur Unterbrechung des Kraftflusses jeweils in ihre Neutralstellung geschaltet werden, dass dann das Hauptgetriebe HG mittels einer Getriebebremse abgebremst wird, und dass eine Führung der Drehzahl des Antriebsmotors auf die Synchrondrehzahl des Zielgangs beginnt. Nach dem Schalten des Hauptgetriebes HG wird die Vorschaltgruppe VG synchronisiert in ihre Zielübersetzung geschaltet. Mit Erreichen der Synchrondrehzahl durch den Antriebsmotor wird dann die Zielübersetzung der Bereichsgruppe BG eingelegt.

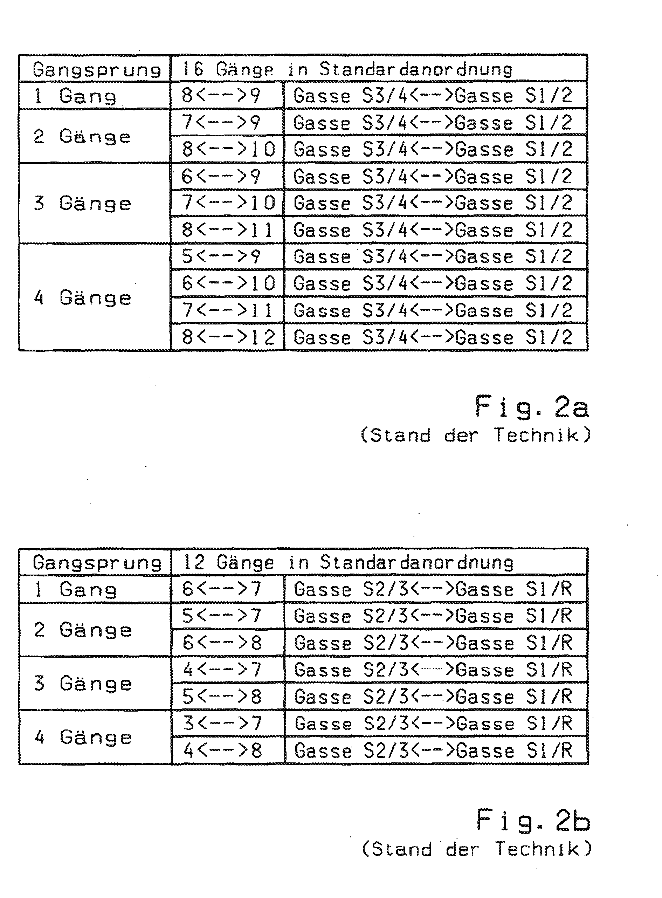

Da bei einer Bereichsschaltung das Hauptgetriebe HG entgegengesetzt zur Bereichsgruppe BG geschaltet wird, also bei einer Hochschaltung der Bereichsgruppe BG von der Langsamfahrstufe L in die Schnellfahrstufe S das Hauptgetriebe HG von einer hohen Übersetzungsstufe, z.B. G4 oder G3, in eine niedrige Übersetzungsstufe, z.B. G1 oder G2, geschaltet wird, ist in dem Hauptgetriebe HG mit der bislang üblichen Anordnung der Übersetzungsstufen in aufsteigender oder absteigender Reihenfolge jeweils ein Wechsel zwischen zwei Schaltgassen und der diesen zugeordneten Schaltpakete erforderlich. Dieser Zusammenhang ist für die bekannten Gruppengetriebe gemäß Fig. 1 a und Fig. 1b in den Tabellen von Fig. 2a und Fig. 2b für unterschiedliche Gangsprünge zusammengefasst. Da ein automatisierter Gassenwechsel jeweils das Ansteuern und Stoppen des zugeordneten Stellantriebs sowie das Sensieren in der Neutralposition des ersten Schaltpakets, die Umschaltung zwischen den beiden Gassen bzw. Schaltpaketen und die Steuerung und Sensierung des Stellantriebs in die bzw. in der Zielschaltstellung des zweiten Schaltpakets umfasst, wirkt sich ein Gassenwechsel nachteilig verzögernd auf den gesamten Schaltungsablauf aus.

Vor diesem Hintergrund liegt der vorliegenden Erfindung die Aufgabe zugrunde, ein verbessertes Verfahren zur Schaltsteuerung eines automatisierten Gruppengetriebes vorzustellen.

Die Lösung dieser Aufgabe ergibt sich aus den Merkmalen des Hauptanspruchs. Demnach ist das erfindungsgemäße Verfahren zur Steuerung einer Bereichsschaltung bei einem Gruppengetriebe anwendbar, das ein mehrstufiges Hauptgetriebe, eine dem Hauptgetriebe vorgeschaltete mehrstufige Split- bzw. Vorschaltgruppe und eine dem Hauptgetriebe nachgeschaltete mehrstufige Bereichsgruppe aufweist, bei dem die Split- bzw. Vorschaltgruppe über eine steuerbare Trennkupplung mit einem als Verbrennungsmotor ausgebildeten Antriebsmotor in Verbindung steht, das Hauptgetriebe und die Bereichsgruppe unsynchronisiert ausgebildet sind, und die Schaltkupplungen von jeweils zwei Übersetzungsstufen in dem Hauptgetriebe und der Bereichsgruppe jeweils in einem gemeinsamen Schaltpaket mit zwei Schaltstellungen und einer Neutralstellung zusammengefasst sind, wobei während einer Bereichsschaltung zumindest in dem Hauptgetriebe und in der Bereichsgruppe jeweils ein Wechsel zwischen zwei Übersetzungsstufen erfolgt.
Das Verfahren umfasst außerdem die folgenden Verfahrensschritte:
- Öffnen der Trennkupplung zum Antriebsmotor und Lastabbau am Antriebsmotor;
- Schalten der Bereichsgruppe in Neutral und Beginn der Drehzahlführung des Antriebsmotors auf die Synchrondrehzahl des Zielgangs;
- Abbremsen des Hauptgetriebes und der Split- bzw. Vorschaltgruppe mittels einer Getriebebremse;
- Wechsel der Übersetzungsstufen in dem Hauptgetriebe und in der Split- bzw. Vorschaltgruppe;
- Synchronisierung der Bereichsgruppe durch teilweises Schließen der Trennkupplung;
- Einlegen der Übersetzungsstufe der Bereichsgruppe;
- gleichzeitiger oder zeitlich überschneidender Lastaufbau am Antriebsmotor und/oder vollständiges Schließen der Trennkupplung.

Dieses Verfahren unterscheidet sich von dem aus der DE 101 52 857 A1 bekannten Verfahren im Wesentlichen dadurch, dass das Gruppengetriebe zu Beginn der Bereichsschaltung durch das Öffnen der Trennkupplung zum Antriebsmotor und durch das Schalten der Bereichsgruppe BG in Neutral kraftlos geschaltet wird, dass anschließend das Hauptgetriebe HG und die Split- bzw. Vorschaltgruppe VG bevorzugt gleichzeitig mittels der Getriebebremse bis in die Nähe des Stillstands abgebremst werden, und dass der Wechsel der Übersetzungsstufen in dem Hauptgetriebe HG und der Split- bzw. Vorschaltgruppe VG vorzugsweise zeitlich parallel erfolgt.

Gemäß einer dazu alternativen Ausgestaltung des Verfahrens gemäß der Erfindung kann vorgesehen sein, dass der Wechsel der Übersetzungsstufen in dem Hauptgetriebe HG und in der Split- bzw. Vorschaltgruppe VG gleichzeitig oder sequentiell erfolgt.

Nach einer anderen Variante kann vorgesehen sein, dass zusammen mit dem Wechsel der Übersetzungsstufen in dem Hauptgetriebe HG dort ein Gassenwechsel erfolgt.

Des Weiteren kann vorgesehen sein, dass der vorletzte Verfahrensschritt, also das Einlegen der neuen Übersetzungsstufe der Bereichsgruppe, bei zumindest teilweise geöffneter Trennkupplung erfolgt.

Des Weiteren kann es bei der Nutzung des Verfahrens gemäß der Erfindung sinnvoll sein, wenn vor dem Abbremsen des Hauptgetriebes in der Split- bzw. Vorschaltgruppe ein Wechsel der Übersetzungsstufe stattfindet. Dadurch lässt sich die Eingangsdrehzahl des Hauptgetriebes auf einen für den Abbremsvorgang vorteilhaften Wert einstellen.

Schließlich wird es als vorteilhaft beurteilt, wenn das Hauptgetriebe und dass Split- bzw. Vorschaltgruppe bis auf eine solche Drehzahl abgebremst werden, ab der die jeweilige Klauenkupplung, vorzugsweise verschleißarm, schaltbar ist.

Das Verfahren gemäß der Erfindung ist sowohl bei dem beschriebenen bekannten Aufbau eines Gruppengetriebes gemäß den Figuren 1 a und 1 b als auch bei einem weiterentwickelten Gruppengetriebe mit Vorteil zur Übersetzungssteuerung verwendbar, bei dem abweichend von dem Gruppengetriebe gemäß Fig. 1 a bzw. 1 b vorgesehen ist, dass in dem Hauptgetriebe die der kleinsten Übersetzungsstufe und die der größten Übersetzungsstufe zugeordneten Schaltkupplungen in einem gemeinsamen Schaltpaket zusammengefasst sind. Der konkrete Aufbau dieses neuen Gruppengetriebes wird weiter unten anhand von zwei Ausführungsbeispielen weiter erläutert.

Durch den erwähnten neuen Aufbau des weiterentwickelten Gruppengetriebes sind jeweils die kleinste Übersetzungsstufe und die größte Übersetzungsstufe schaltungstechnisch derselben Schaltgasse zugeordnet. Dies hat vorteilhaft zur Folge, dass alle Bereichsschaltungen, bei denen in dem Hauptgetriebe zwischen der kleinsten und der größten Übersetzungsstufe gewechselt wird, dort innerhalb derselben Schaltgasse durch eine einfache Umschaltung des betreffenden Schaltpakets von der einen Schaltstellung in die andere Schaltstellung erfolgen. Es muss demnach keine gesonderte Drehzahlanpassung für einen solchen Schaltvorgang durchgeführt werden. Ein bei der bisherigen Anordnung der Zahnradsätze und der Zuordnung der Schaltpakete üblicher Wechsel zwischen zwei Schaltgassen bzw. zwei Schaltpaketen wird vermieden, wodurch die gesamte Schaltzeit der Bereichsschaltung und damit die zugkraftfreie Phase während der Bereichsschaltung verkürzt wird. Bei Schaltungen des Gruppengetriebes ohne eine Schaltung der Bereichsgruppe tritt keine zeitliche Verzögerung ein, da der Gassenwechsel im Hauptgetriebe während der Synchronisierungsphase des Hauptgetriebes erfolgt.

Zur Verdeutlichung der Erfindung ist der Beschreibung eine Zeichnung mit Ausführungsbeispielen beigefügt.
In diesen zeigt:
- Fig. 1 a: den schematischen Aufbau eines bekannten Gruppengetriebes mit einem vierstufigen Hauptgetriebe;
- Fig. 1 b: den schematischen Aufbau eines bekannten Gruppengetriebes mit einem dreistufigen Hauptgetriebe;
- Fig. 2a: eine tabellarische Übersicht der Bereichsschaltungen des bekannten Gruppengetriebes gemäß Fig. 1 a;
- Fig. 2b: eine tabellarische Übersicht der Bereichsschaltungen des bekannten Gruppengetriebes gemäß Fig. 1 b;
- Fig. 3a: den schematischen Aufbau eines neuen Gruppengetriebes mit einem vierstufigen Hauptgetriebe;
- Fig. 3b: den schematischen Aufbau eines neuen Gruppengetriebes mit einem dreistufigen Hauptgetriebe;
- Fig. 4a: eine tabellarische Übersicht der Bereichsschaltungen des neuen Gruppengetriebes nach Fig. 3a;
- Fig. 4b: eine tabellarische Übersicht der Bereichsschaltungen des neuen Gruppengetriebes nach Fig. 3b und
- Fig. 5: den zeitlichen Ablauf einer Bereichsschaltung mit dem Verfahren gemäß der Erfindung bei den neuen Gruppengetrieben nach Fig. 3a und Fig. 3b.

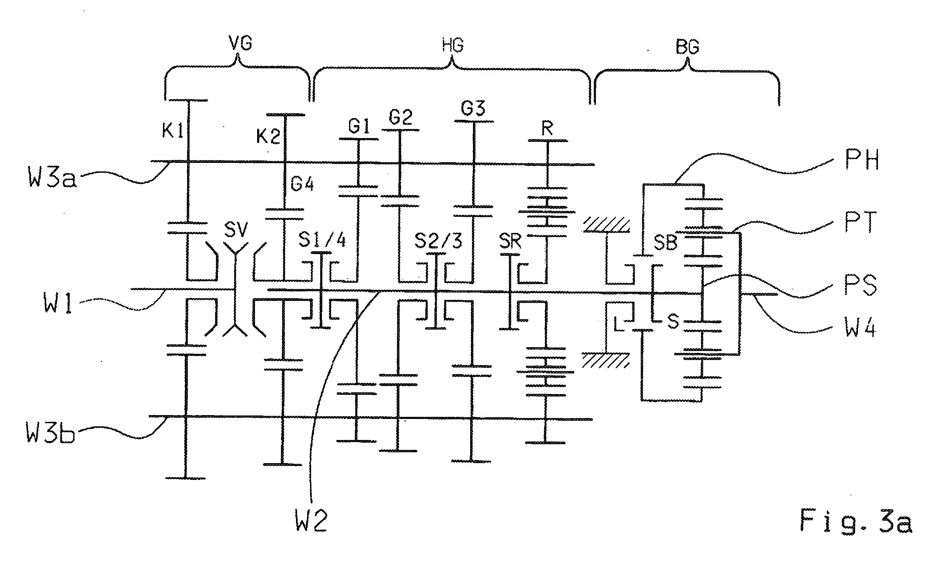

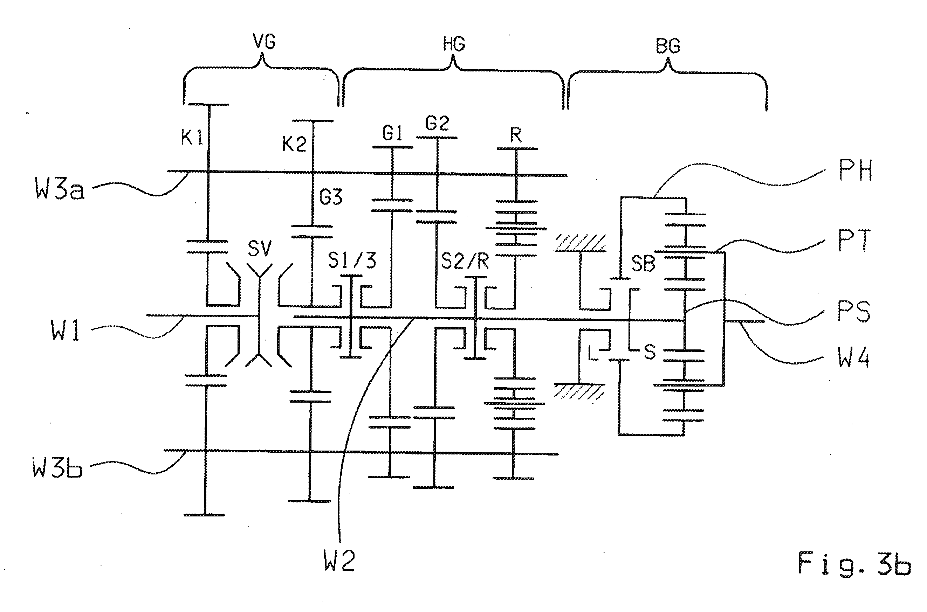

In den Fig. 3a und 3b ist beispielhaft der schematische Aufbau von zwei neuen Gruppengetrieben dargestellt. Das Hauptgetriebe HG ist jeweils in Vorgelegebauweise ausgeführt und weist eine Hauptwelle W2 sowie zwei Vorgelegewellen W3a, W3b auf. In der Ausführungsform nach Fig. 3a ist das Hauptgetriebe HG mit vier Übersetzungsstufen G1 bis G4 für die Vorwärtsfahrt und einer Übersetzungsstufe R für die Rückwärtsfahrt vierstufig ausgebildet. In der Ausführungsform nach Fig. 3b ist das Hauptgetriebe HG mit drei Übersetzungsstufen G1 bis G3 für die Vorwärtsfahrt und einer Übersetzungsstufe R für die Rückwärtsfahrt dreistufig ausgebildet.

Die Losräder der Übersetzungsstufen G1, G2, G3 und R bzw. G1, G2 und R sind jeweils drehbar auf der Hauptwelle W2 gelagert und über zugeordnete Klauenkupplungen schaltbar. Die zugeordneten Festräder sind drehfest auf den Vorgelegewellen W3a bzw. W3b angeordnet. Die jeweils als Direktgang ausgebildete höchste Übersetzungsstufe G4 bzw. G3 ist über eine Direktschaltkupplung schaltbar.

Im Unterschied zu den eingangs beschriebenen bekannten Ausführungsformen von Gruppengetrieben gemäß Fig. 1 a und Fig. 1b ist in dem neu ausgebildeten Hauptgetriebe HG der Zahnradsatz der kleinsten Übersetzungsstufe G1 nunmehr eingangsseitig neben der Direktschaltkupplung des Direktgangs G4 bzw. G3 angeordnet, und die Schaltkupplungen der ersten Übersetzungsstufe G1 und des Direktgangs G4 bzw. G3 sind jeweils in einem gemeinsamen Schaltpaket S1/4 bzw. S1/3 zusammengefasst. Die Schaltkupplurigen der übrigen Übersetzungsstufen sind entsprechend in den Schaltpaketen S2/3, SR bzw. S2/R zusammengefasst.

Die Vorschaltgruppe VG ist zweistufig ausgebildet und ebenfalls in Vorgelegebauweise ausgebildet, wobei die beiden Übersetzungsstufen K1 und K2 zwei schaltbare Eingangskonstanten des Hauptgetriebes HG bilden. Durch eine geringe Übersetzungsdifferenz der beiden Übersetzungsstufen K1, K2 ist die Vorschaltgruppe VG als Splitgruppe ausgelegt. Das Losrad der ersten Übersetzungsstufe K1 ist drehbar auf der Eingangswelle W1 gelagert, die außerhalb der Darstellung von Fig. 3a bzw. Fig. 3b über eine steuerbare Trennkupplung mit einem als Verbrennungsmotor ausgebildeten Antriebsmotor in Verbindung steht. Das Losrad der zweiten Übersetzungsstufe K2 ist drehbar auf der Hauptwelle W2 gelagert. Die Festräder beider Übersetzungsstufen K1 und K2 sind jeweils drehfest auf den eingangsseitig verlängerten Vorgelegewellen W3a bzw. W3b angeordnet. Die synchronisiert ausgebildeten Schaltkupplungen der Vorschaltgruppe VG sind in einem gemeinsamen Schaltpaket SV zusammengefasst.

Die antriebstechnisch dem Hauptgetriebe HG nachgeordnete Bereichsgruppe BG ist ebenfalls zweistufig ausgebildet, jedoch in Planetenbauweise mit einem einfachen Planetenradsatz ausgeführt. Die Bereichsgruppe BG kann aber auch in Vorgelegebauweise konstruiert sein. Das Sonnenrad PS ist dabei drehfest mit der ausgangsseitig verlängerten Hauptwelle W2 verbunden. Der Planetenträger PT ist drehfest mit der Ausgangswelle W4 des Gruppengetriebes gekoppelt. Das Hohlrad PH steht mit einem Schaltpaket SB mit zwei Schaltkupplungen in Verbindung, durch welche die Bereichsgruppe BG wechselweise durch die Verbindung des Hohlrades PH mit einem feststehenden Gehäuseteil in eine Langsamfahrstufe L und durch die Verbindung des Hohlrades PH mit der Hauptwelle W2 bzw. dem Sonnenrad PS in eine Schnellfahrstufe S schaltbar ist. Alternativ dazu ist in einer nicht dargestellten Schnellfahrstufe S auch eine Schaltverbindung des Hohlrades PH mit dem Planetenträger PT möglich. Der Aufbau der Bereichsgruppe BG wäre dann ähnlich dem Aufbau der Bereichsgruppe BG der Gruppengetriebe der Fig. 1 a und 1 b. Die Schaltkupplungen des Schaltpakets SB sind Kosten sparend unsynchronisiert ausgebildet.

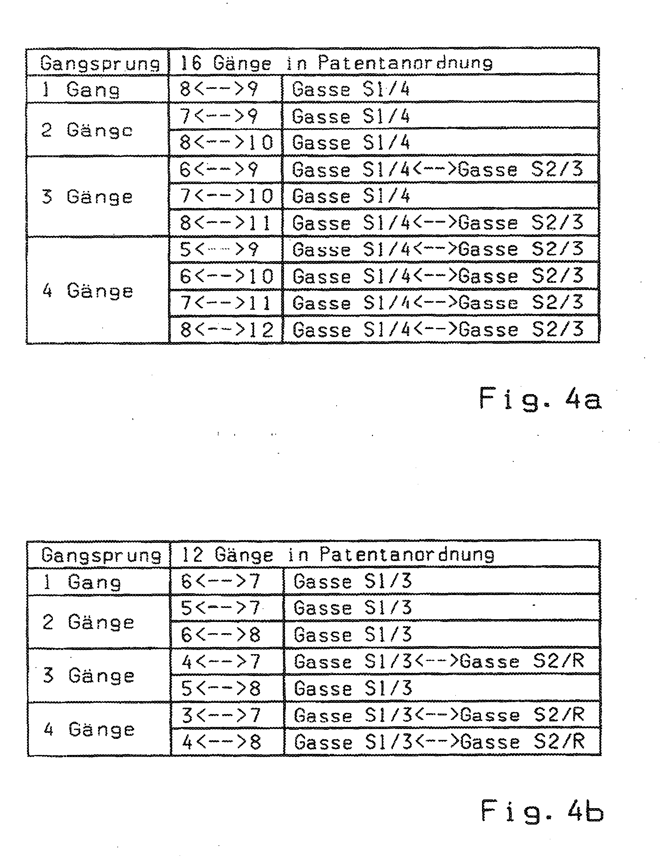

Aufgrund der Ausbildung der neuen Gruppengetriebe gemäß den Fig. 3a und 3b, insbesondere durch die Anordnung der Zahnradsätze der Übersetzungsstufen G1, G2, G3, R bzw. G1, G2, R sowie der Zuordnung der Schaltpakete S1/4 bzw. S1/3 in dem Hauptgetriebe HG, sind die meisten Bereichsschaltungen bei diesen Gruppengetrieben ohne einen Wechsel der Schaltgasse bzw. des Schaltpakets und somit im Vergleich zu bekannten Gruppengetrieben mit einer Standardanordnung der Übersetzungsstufen in aufsteigender oder absteigender Reihenfolge deutlich schneller durchführbar. Dieser Zusammenhang ist für die neuen Gruppengetriebe gemäß Fig. 3a und Fig. 3b in den Tabellen von Fig. 4a und Fig. 4b für unterschiedliche Gangsprünge zusammengefasst.

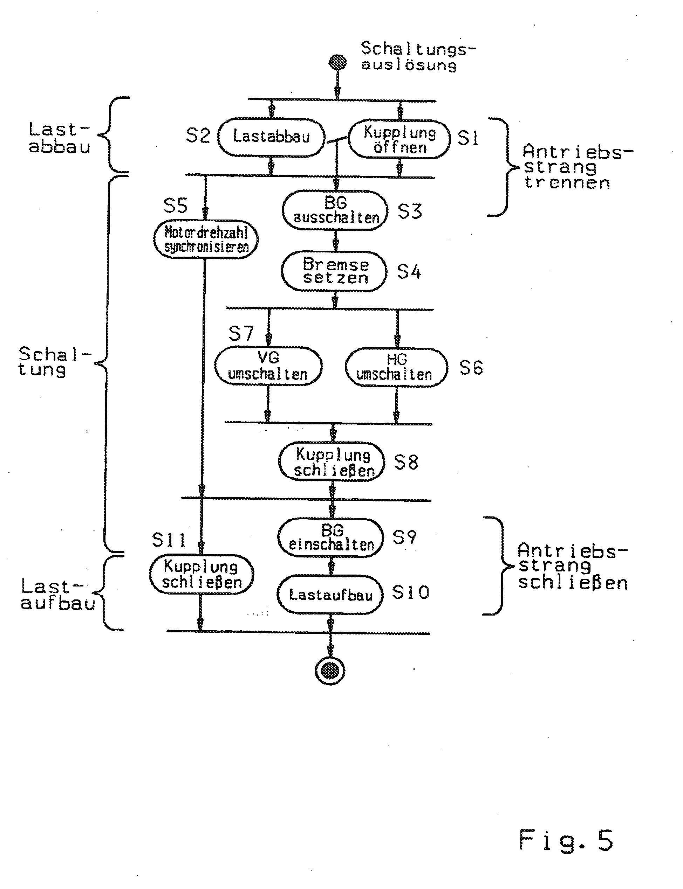

Ein erfindungsgemäßes Verfahren zur Steuerung einer Bereichsschaltung für ein Gruppengetriebe mit einer klauengeschalteten Bereichsgruppe BG ist beispielhaft jeweils in Form eines Ablaufplans für ein Hauptgetriebe HG mit der neuen Anordnung der Übersetzungsstufen und Zuordnung der Schaltpakete gemäß Fig. 3a und Fig. 3b in Fig. 5 dargestellt.

So zeigt Fig. 5, dass nach der Auslösung der Schaltung in Schritt S1 die zwischen dem Antriebsmotor und der Eingangswelle W1 des Gruppengetriebes angeordnete Trennkupplung geöffnet und vorzugsweise gleichzeitig in Schritt S2 der Antriebsmotor in den Leerlauf gesteuert wird. Zeitlich damit überschneidend oder unmittelbar danach wird in Schritt S3 die Bereichsgruppe BG in Neutral geschaltet (BG ausschalten), wodurch das gesamte Gruppengetriebe sowohl von dem Antriebsmotor als auch von dem abtriebsseitigen Antriebsstrang, also den Fahrzeugrädern getrennt und somit vollständig lastfrei ist. Anschließend wird im Schritt S4 das Hauptgetriebe HG und die Vorschaltgruppe VG mittels einer Getriebebremse bis in die Nähe des Stillstands oder ganz bis zum Stillstand abgebremst (Bremse setzen). Gleichzeitig oder zeitlich überschneidend beginnt mit Schritt S5 die Anpassung der Motordrehzahl an die Synchrondrehzahl des Zielgangs der Schaltung.

In dem Schritt S6 erfolgt der Wechsel der Übersetzungsstufen in dem Hauptgetriebe HG und, sofern notwendig, gleichzeitig oder zeitlich davor oder danach in Schritt S7 (VG umschalten) der Wechsel der Übersetzungsstufen in der Vorschaltgruppe VG.

Damit wird deutlich, dass der Wechsel der Übersetzungsstufen bei der neuen Anordnung der Übersetzungsstufen des Gruppengetriebes gemäß den Fig. 3a und 3b entsprechend dem Ablaufplan der Fig. 5 nur in einem Wechsel innerhalb ein und derselben Schaltgasse bzw. innerhalb eines Schaltpakets von einer Schaltstellung in die andere Schaltstellung (HG umschalten; Schritt S6) erfolgt, welches deutlich schneller erfolgen kann als bisher und somit die Schaltdauer der Bereichsschaltung verkürzt.

In Schritt S8 (Kupplung schließen) wird durch ein zumindest teilweises Schließen der Trennkupplung die Bereichsgruppe BG durch ein Beschleunigen der Split- bzw. Vorschaltgruppe VG und des Hauptgetriebes HG synchronisiert, und in dem nachfolgenden Schritt S9 (BG einschalten) die neue Übersetzungsstufe der Bereichsgruppe BG eingelegt. Danach erfolgt in Schritt S10 (Lastaufbau) der Lastaufbau des Antriebsmotors und gleichzeitig oder parallel dazu in Schritt S11 (Kupplung schließen) das vollständige Schließen der Trennkupplung.

### Bezugszeichen

- BG: Bereichsgruppe
- G1: (erste) Übersetzungsstufe (von HG)
- G2: (zweite) Übersetzungsstufe (von HG)
- G3: (dritte) Übersetzungsstufe (von HG)
- G4: (vierte) Übersetzungsstufe (von HG)
- HG: Hauptgetriebe
- i_{BG}: Übersetzung von BG
- i_{HG}: Übersetzung von HG
- i_{HG_min}: kleinste Übersetzung von HG
- K1: (erste) Übersetzungsstufe (von VG)
- K2: (zweite) Übersetzungsstufe (von VG)
- L: Langsamfahrstufe (von BG)
- PH: Hohlrad (von BG)
- PS: Sonnenrad (von BG)
- PT: Planetenträger (von BG)
- R: Rückwärts-Übersetzungsstufe (von HG)
- S: Schnellfahrstufe (von BG)
- SB: Schaltpaket (von BG)
- SR: Schaltpaket (von HG)
- SV: Schaltpaket (von VG), Direktschaltkupplung
- S1: Verfahrensschritt
- S2: Verfahrensschritt
- S3: Verfahrensschritt
- S4: Verfahrensschritt
- S5: Verfahrensschritt
- S6: Verfahrensschritt
- S7: Verfahrensschritt
- S8: Verfahrensschritt
- S9: Verfahrensschritt
- S10: Verfahrensschritt
- S11: Verfahrensschritt
- S1/2: Schaltpaket (von HG)
- S1/3: Schaltpaket (von HG)
- S1/4: Schaltpaket (von HG)
- S1/R: Schaltpaket (von HG)
- S2/3: Schaltpaket (von HG)
- S2/R: Schaltpaket (von HG)
- S3/4: Schaltpaket (von HG)
- VG: Vorschaltgruppe, Splitgruppe
- W1: Eingangswelle
- W2: Hauptwelle
- W3a: Vorgelegewelle
- W3b: Vorgelegewelle
- W4: Ausgangswelle

## Patentansprüche

1. Verfahren zur Schaltsteuerung eines automatisierten Gruppengetriebes, das ein mehrstufiges Hauptgetriebe (HG), eine dem Hauptgetriebe (HG) vorgeschaltete mehrstufige Split- bzw. Vorschaltgruppe (VG) und eine dem Hauptgetriebe (HG) nachgeschaltete mehrstufige Bereichsgruppe (BG) aufweist, bei dem die Split- bzw. Vorschaltgruppe (VG) über eine steuerbare Trennkupplung mit einem als Verbrennungsmotor ausgebildeten Antriebsmotor in Verbindung steht, das Hauptgetriebe (HG) und die Bereichsgruppe (BG) unsynchronisiert ausgebildet sind, und die Schaltkupplungen von jeweils zwei Übersetzungsstufen in dem Hauptgetriebe (HG) und der Bereichsgruppe (BG) jeweils in einem gemeinsamen Schaltpaket mit zwei Schaltstellungen und einer Neutralstellung zusammengefasst sind, wobei während einer Bereichsschaltung zumindest in dem Hauptgetriebe (HG) und in der Bereichsgruppe (BG) jeweils ein Wechsel zwischen zwei Übersetzungsstufen erfolgt, **gekennzeichnet durch** folgende Verfahrensschritte:
- Öffnen der Trennkupplung zum Antriebsmotor und Lastabbau am Antriebsmotor;
- Schalten der Bereichsgruppe (BG) in Neutral und Beginn der Drehzahlführung des Antriebsmotors auf die Synchrondrehzahl des Zielgangs;
- Abbremsen des Hauptgetriebes (HG) und der Split- bzw. Vorschaltgruppe (VG) mittels einer Getriebebremse;
- Wechsel der Übersetzungsstufen in dem Hauptgetriebe (HG) und in der Split- bzw. Vorschaltgruppe (VG);
- Synchronisierung der Bereichsgruppe (BG) **durch** teilweises Schließen der Trennkupplung;
- Einlegen der Übersetzungsstufe der Bereichsgruppe (BG);
- gleichzeitiger oder zeitlich überschneidender Lastaufbau am Antriebsmotor und/oder vollständiges Schließen der Trennkupplung.

2. Verfahren nach Anspruch 1, **dadurch gekennzeichnet, dass** der Wechsel der Übersetzungsstufen in dem Hauptgetriebe (HG) und in der Split- bzw. Vorschaltgruppe (VG) gleichzeitig oder sequentiell erfolgt (Schritt S6, Schritt S7).

3. Verfahren nach Anspruch 1 oder 2, **dadurch gekennzeichnet, dass** zusammen mit dem Wechsel der Übersetzungsstufen in dem Hauptgetriebe (HG) dort ein Gassenwechsel erfolgt.

4. Verfahren nach zumindest einem der Ansprüche 1 bis 3, **dadurch gekennzeichnet, dass** der vorletzte Verfahrensschritt, also das Einlegen der neuen Übersetzungsstufe der Bereichsgruppe (BG), bei zumindest teilweise geöffneter Trennkupplung erfolgt.

5. Verfahren nach zumindest einem der Ansprüche 1 bis 4, **dadurch gekennzeichnet, dass** vor dem Abbremsen des Hauptgetriebes (HG) in der Split- bzw. Vorschaltgruppe (VG) ein Wechsel der Übersetzungsstufe stattfindet.

6. Verfahren nach zumindest einem der Ansprüche 1 bis 5, **dadurch gekennzeichnet, dass** das Hauptgetriebe (HG) und dass Split- bzw. Vorschaltgruppe (VG) bis auf eine Drehzahl abgebremst werden, ab der die jeweilige Klauenkupplung schaltbar ist.

## Claims

1. Shift control method for an automatic group transmission which has a multi-stage main transmission (HG), a multi-stage splitter group (VG) mounted upstream of the main transmission (HG) and a multi-stage range group (BG) mounted downstream of the main transmission (HG), in which the splitter group (VG) is connected via a controllable separating clutch to a drive engine which is embodied as an internal combustion engine, the main transmission (HG) and the range group (BG) are embodied in an unsynchronized form and the clutches of, in each case, two transmission stages in the main transmission (HG) and the range group (BG) are each combined in a common shift packet with two shift positions and one neutral position, wherein a changeover between the two transmission stages respectively occurs during a range change at least in the main transmission (HG) and in the range group (BG), **characterized by** the following method steps:
- opening of the separating clutch which connects to the drive engine, and reduction of load at the drive engine;
- shifting of the range group (BG) to neutral, and starting of adjustment of the rotation speed of the drive engine to the synchronizing rotational speed of the target gearspeed;
- braking of the main transmission (HG) and of the splitter group (VG) by means of a transmission brake;
- changeover of the transmission stages in the main transmission (HG) and in the splitter group (VG),
- synchronization of the range group (BG) by partially closing the separating clutch;
- engagement of the transmission stage of the range group (BG);
- simultaneous or chronologically overlapping increasing of load at the drive engine and/or complete closing of the separating clutch.

2. Method according to Claim 1, **characterized in that** the changeover of the transmission stages in the main transmission (HG) and in the splitter group (VG) takes place simultaneously or sequentially (step S6, step S7).

3. Method according to Claim 1 or 2, **characterized in that** together with the changeover of the transmission stages in the main transmission (HG), a changeover of the shift gate takes place there.

4. Method according to at least one of Claims 1 to 3, **characterized in that** the penultimate method step that is to say the engagement of the new transmission stage of the range group (BG) takes place with the separating clutch at least partially opened.

5. Method according to at least one of Claims 1 to 4, **characterized in that** a changeover of the transmission stage takes place before braking of the main transmission (HG) in the splitter group (VG).

6. Method according to at least one of Claims 1 to 5, **characterized in that** the main transmission (HG) and the splitter transmission (VG) are braked to a rotational speed starting from which the respective dog clutch can be shifted.

## Revendications

1. Procédé de commande de changement de vitesses d'une boîte de vitesses à changement de gamme de vitesses automatisée, qui présente une boîte de vitesses principale (HG) à plusieurs rapports, un doubleur de gamme ou groupe monté en avant de la boîte de vitesses (VG) à plusieurs rapports monté en avant de la boîte de vitesses principale (HG) et un groupe-relais (BG) à plusieurs rapports monté après la boîte de vitesses principale (HG), dans lequel le doubleur de gamme ou groupe monté en avant de la boîte de vitesses (VG) est en liaison par le biais d'un embrayage séparateur commandable avec un moteur d'entraînement réalisé sous forme de moteur à combustion interne, la boîte de vitesses principale (HG) et le groupe-relais (BG) sont réalisés de manière non synchronisée, et les embrayages de changement de vitesses de deux rapports de démultiplication respectifs dans la boîte de vitesses principale (HG) et dans le groupe-relais (BG) sont réunis à chaque fois en un paquet de changement de vitesses commun avec deux positions de changement de vitesse et une position neutre, où, pendant un changement de vitesses de gamme, au moins dans la boîte de vitesses principale (HG) et dans le groupe-relais (BG), a lieu à chaque fois un changement entre deux rapports de démultiplication, **caractérisé par** les étapes de procédé suivantes :
- ouverture de l'embrayage séparateur par rapport au moteur d'entraînement et diminution de la charge sur le moteur d'entraînement ;
- commutation du groupe-relais (BG) en position neutre et début de l'amenée du régime du moteur d'entraînement à la vitesse de rotation synchrone de la vitesse cible ;
- freinage de la boîte de vitesses principale (HG) et du doubleur de gamme ou groupe monté en avant de la boîte de vitesses (VG) au moyen d'un frein de boîte de vitesses ;
- changement des rapports de démultiplication dans la boîte de vitesses principale (HG) et dans le doubleur de gamme ou groupe monté en avant de la boîte de vitesses (VG),
- synchronisation du groupe-relais (BG) par fermeture partielle de l'embrayage séparateur ;
- enclenchement du rapport de démultiplication du groupe-relais (BG) ;
- augmentation simultanée ou se recoupant dans le temps au niveau du moteur d'entraînement et/ou fermeture complète de l'embrayage séparateur.

2. Procédé selon la revendication 1, **caractérisé en ce que** le changement des rapports de démultiplication dans la boîte de vitesses principale (HG) et dans le doubleur de gamme ou groupe monté en avant de la boîte de vitesses (VG) s'effectue simultanément ou séquentiellement (étapes S6, étape S7).

3. Procédé selon la revendication 1 ou 2, **caractérisé en ce que**, conjointement avec le changement des rapports de démultiplication dans la boîte de vitesses principale (HG), il se produit dans celle-ci un changement de voie.

4. Procédé selon au moins l'une quelconque des revendications 1 à 3, **caractérisé en ce que** l'avant-dernière étape de procédé, c'est-à-dire l'enclenchement du nouveau rapport de démultiplication du groupe-relais (BG), a lieu lorsque l'embrayage séparateur est au moins en partie ouvert.

5. Procédé selon au moins l'une quelconque des revendications 1 à 4, **caractérisé en ce qu'**avant le freinage de la boîte de vitesses principale (HG) dans le doubleur de gamme ou groupe monté en avant de la boîte de vitesses (VG), a lieu un changement de rapport de démultiplication.

6. Procédé selon au moins l'une quelconque des revendications 1 à 5, **caractérisé en ce que** la boîte de vitesses principale (HG) et le doubleur de gamme ou groupe monté en avant de la boîte de vitesses (VG) sont freinés jusqu'à une vitesse de rotation à partir de laquelle l'embrayage à griffes respectif peut être commuté.
